# EUROPEAN PATENT SPECIFICATION

(11) **EP 1 837 205 B1**
(45) Date of publication and mention of the grant of the patent: **28.04.2010**
(21) Application number: 05806173.0
(22) Date of filing: 09.11.2005
(51) Int. Cl.: B60C 9/18, B60C 9/00, B60C 9/20, B60C 9/22, B60C 11/00

(54) **PNEUMATIC TIRE**
LUFTREIFEN
PNEUMATIQUE

(30) Priority: 27.12.2004 JP 2004376531
(43) Date of publication of application: 26.09.2007
(73) Proprietor: Bridgestone Corporation, Tokyo 104-8340 (JP)
(72) Inventor: MATSUMOTO, Masayuki BRIDGESTONE CORPORATION, Kodaira-shi, Tokyyo 1878531 (JP); MATSUDA, Kazuhiko BRIDGESTONE CORPORATION, Kodaira-shi, Tokyo 1878531 (JP); KUWAYAMA, Isao BRIDGESTONE CORPORATION, Kodaira-shi, Tokyo 1878531 (JP); ISHIYAMA, Makoto BRIDGESTONE CORPORATION, Kodaira-shi, Tokyo 1878531 (JP); KOIDE, Masafumi BRIDGESTONE CORPORATION, Kodaira-shi, Tokyo 1878531 (JP); KAWAI, Takashi BRIDGESTONE CORPORATION, Kodaira-shi, Tokyo 1878531 (JP)
(74) Representative: Whalley, Kevin
(86) International application number: PCT/JP2005/020535
(87) International publication number: WO 2006/070533

(56) References cited:
- EP-A- 0 297 889
- EP-A- 1 122 098
- JP-A- 4 331 606
- JP-A- 8 216 618
- JP-A- 2001 121 916
- JP-A- 2001 213 116
- JP-A- 2002 046 415
- JP-A- 2003 231 403
- JP-A- 2003 231 403
- JP-A- 2004 345 437
- JP-A- 2004 345 437
- US-B1- 6 619 357

## Description

### TECHNICAL FIELD

This invention relates to a pneumatic tire comprising a belt reinforcing layer arranged between a belt layer and a carcass layer.

### BACKGROUND ART

As the conventional pneumatic tire, there is known a tire as disclosed, for example, in the following Patent Document 1, or Patent Document 2.

This tire comprises a carcass layer toroidally extending between a pair of bead cores and wound around the bead cores at its widthwise both end portions, a belt layer arranged at an outside of the carcass layer in a radial direction and comprised of two belt plies each embedded with metallic wire cords therein, the cords of which plies being crossed with each other at an inclination angle of 15°-35° with respect to an equator of the tire, a tread arranged at an outside of the belt layer in the radial direction, and a belt reinforcing layer arranged between the belt layer and the tread and embedded therein with reinforcing cords of an organic fiber extending substantially in parallel to the equator of the tire.

In this case, the large growing of the size of the tread portion in the pneumatic tire for high-performance passenger car or truck or bus due to the centrifugal force during the high-speed running is suppressed by the reinforcing cords in the belt reinforcing layer extending substantially in parallel to the equator of the tire, whereby it is attempted to reduce heat build-up and strain at the belt end to improve the high-speed durability but also the steering stability. Patent Document 1: JP-A-2002-46415 ; Patent Document 2 : JP-A-2001-121916.

### DISCLOSURE OF THE INVENTION

### PROBLEMS TO BE SOLVED BY THE INVENTION

In such a conventional pneumatic tire, however, the metallic wire cords embedded in the belt ply are inclined at a small angle of 15°-35° with respect to the equator of the tire and the reinforcing cords in the belt reinforcing layer extend substantially in parallel to the equator of the tire as mentioned above, so that an out-of-plane bending rigidity in a circumferential direction (rigidity to the bending in a widthwise direction of the tire as a folding line) becomes higher at a site of overlapping these cords with each other, whereby there is caused a problem that a longitudinal spring constant in the pneumatic tire is increased to deteriorate the ride comfort and a sufficient driving force can not be ensured due to the shortening of a ground contact length.

It is an object of the invention to provide a pneumatic tire capable of improving the ride comfort and driving performance while maintaining the high-speed durability and steering stability.

### MEANS FOR SOLVING PROBLEMS

Such an object can be achieved by a pneumatic tire comprising a carcass layer toroidally extending between a pair of bead cores and wound around the bead cores at its widthwise both end portions, a belt layer arranged at an outside of the carcass layer in a radial direction and comprised of at least two belt plies each embedded with steel cords therein, the cords of which plies being slantly crossed with each other with respect to an equator S of the tire, a tread arranged at an outside of the belt layer in the radial direction, and a belt reinforcing layer arranged so as to overlap with the belt layer and embedded in its interior with reinforcing cords of an organic fiber extending substantially in parallel to the equator S of the tire, in which an inclination angle A of the steel cord in all belt plies with respect to the equator S of the tire is not less than 45°, and the belt reinforcing layer is arranged between the belt layer and the carcass layer, and a radius of curvature R of an outer profile of the tread in a meridional section of the tire is not less than 3000 mm in at least a central portion of the tread.

### EFFECT OF THE INVENTION

In the invention, the steel cords in the belt plies are inclined at an angle A of not less than 45° with respect to the equator S of the tire and extended along the widthwise direction rather than in the circumferential direction, so that the out-of-plane bending rigidity of the belt layer in the circumferential direction is lowered, whereby the longitudinal spring constant of the pneumatic tire is made small to improve the ride comfort.

Further, as the inclination angle A is not less than 45°, the growth in the circumferential direction at the time of ground contact deformation is absorbed by stretching the coating rubber between the steel cords, so that the inextensible steel cords do not obstruct the deformation of the tire too, and hence the ground contact length becomes long and the sufficient driving force can be ensured.
Moreover, as the inclination angle A is not less than 45°, the rigidity to compression force in the widthwise direction becomes high, so that the buckling deformation in the widthwise direction can be suppressed, and hence the ground contacting form can be maintained substantially at a constant form.

In the invention is also arranged the belt reinforcing layer embedded in its interior with the reinforcing cords of the organic fiber extending substantially in parallel to the equator S of the tire, so that the large growth of the tread portion outward in the radial direction due to the centrifugal force during the high-speed running is suppressed and the steering stability and high-speed durability of the tire can be maintained as they are.

If the belt reinforcing layer is arranged between the belt layer and the tread as in the conventional technique, the physical step difference is existent at the belt end, and hence the radius of the belt reinforcing layer changes at this site when the width of the belt reinforcing layer is wider than that of the belt layer. However, when the belt reinforcing layer is arranged between the belt layer and the carcass layer as in the invention, since the carcass layer has substantially the constant outer diameter irrespectively of the widthwise positions, the radius of the belt reinforcing layer is uniformized to make the rigidity uniform, whereby the steering stability is improved.

Furthermore, according to the invention, as the inclination angle A is made to the aforementioned angle range, the out-of-plane bending rigidity in the widthwise direction of the tread portion (belt layer) (rigidity to the bending in the circumferential direction of the tire as a folding line) becomes high. In this case, however, as the radius of curvature R of the outer profile of the tread is made a relatively small value, the tread portion is also largely deformed in the ground contacting, and the tire loading is fairly born by the tread portion having a high out-of-plane bending rigidity in the widthwise direction, and hence the longitudinal spring constant of the pneumatic tire takes a large value and the ride comfort is deteriorated.

However, when the radius of curvature R of the outer profile of the tread in at least a central portion of the tread at the meridional section of the tire is made to not less than 3000 mm as previously mentioned, a wide region of the outer profile of the tread becomes substantially in parallel to a road surface and the deformation amount of the tread portion at the ground contacting becomes small, and hence the tire loading is not substantially born by the tread portion having a high out-of-plane bending rigidity in the widthwise direction but is almost born by the sidewall portion having a low bending rigidity and the deterioration of the ride comfort can be suppressed.

Furthermore, the tread portion of the pneumatic tire is deformed at the leading time and trailing time in the ground contacting to cause strain at the belt end. If the radius of curvature R of the outer profile of the tread is a relatively small value, the strain at the belt end becomes large at the leading time and trailing time and hence the cracking is easily caused to deteriorate the durability. However, when the radius of curvature R of the outer profile of the tread in at least a central portion of the tread is not less than 3000 mm as previously mentioned, a wide region of the outer profile of the tread becomes substantially in parallel to the road surface and the deformation amount of the tread portion at the leading time and trailing time becomes small, and hence the strain generated at the belt end becomes small and the deterioration of the durability due to the cracking can be suppressed.

According to the construction as described in claim 2, the in-plane shear rigidity can be ensured to maintain lateral force generated in the cornering at a sufficient value while sufficiently keeping the improvement of the ride comfort, ensuring of driving force and suppression of buckling deformation.
Further, according to the construction as described in claim 3, the strain at the belt end and cracking can be suppressed forcedly but also the size growth in the greater part or the whole of the tread portion based on the high-speed running under an inflation of an internal pressure can be controlled strongly, whereby the durability of the tire can be improved effectively.

Also, as a plurality of main grooves are formed on the outer surface of the tread, if a large lateral force is applied to the pneumatic tire, there is a fear of causing the buckling deformation in the main groove having a low bending rigidity. According to the construction as described in claim 4, however, the inextensible steel cords extending in the widthwise direction can effectively suppress the above buckling deformation as a resistance.

According to the construction as described in claim 5, the belt reinforcing layer can be shaped in a high efficiency and a high precision.
According to the construction as described in claim 6, the size growth of the tread portion can be forcedly suppressed even if the temperature of the tread portion becomes higher during the high-speed running while attaining the weight reduction.

### BRIEF DESCRIPTION OF THE DRAWINGS

FIG. 1 is a meridional section view illustrating an embodiment of the invention.
FIG. 2 is a plane view partly shown in section of a tread portion.
FIG. 3 is a meridional section view of a comparative tire used in a test.

### DESCRIPTION OF REFERENCE SYMBOLS

- 11: pneumatic tire
- 12: bead core
- 18: carcass layer
- 23: belt layer
- 24, 25: belt ply
- 26, 27: steel cord
- 31: tread
- 32: main groove
- 35: belt reinforcing layer
- 37: reinforcing cord
- S: equator of tire
- A: inclination angle
- R: radius of curvature

### BEST MODE FOR CARRYING OUT THE INVENTION

An embodiment of the invention will be described with reference to the accompanying drawings below.

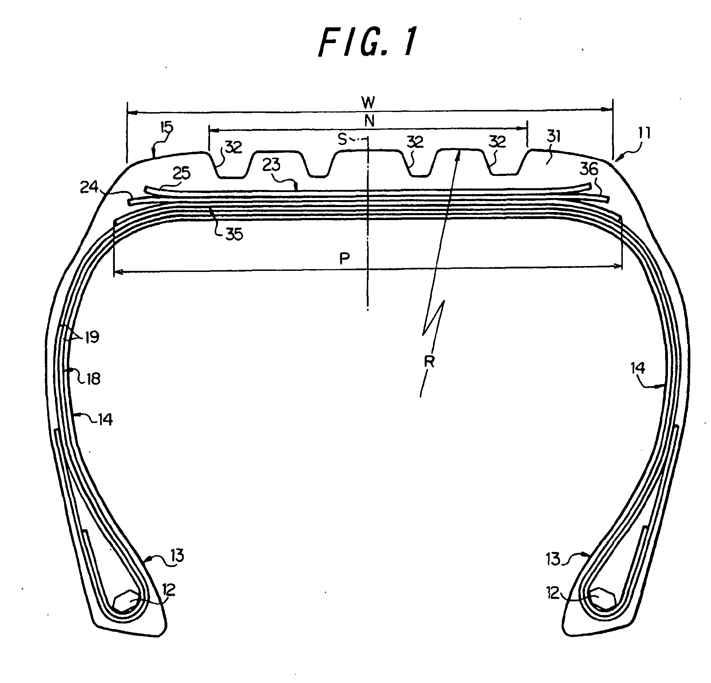

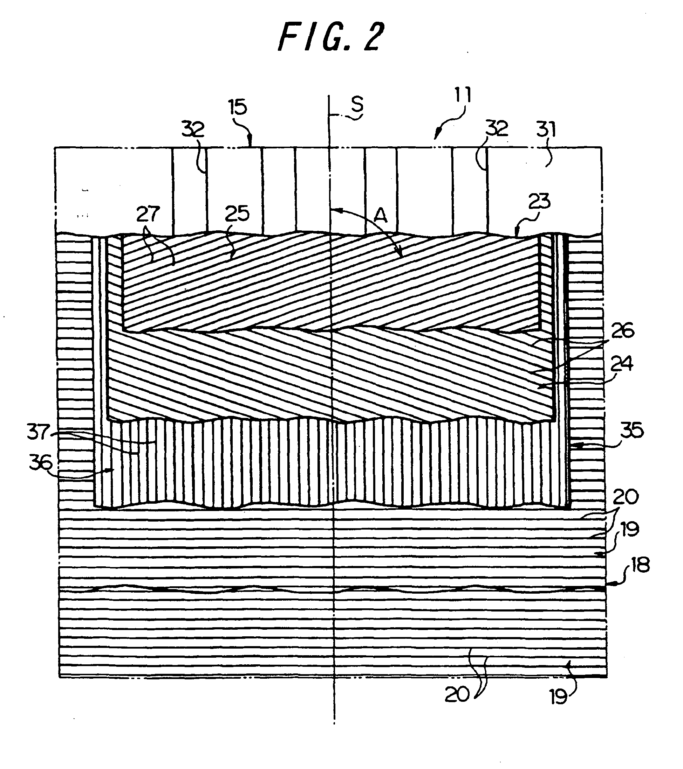

In FIGS. 1 and 2, numeral 11 is a pneumatic radial tire for a passenger car capable of running at a high speed. This pneumatic tire 11 comprises a pair of bead portions 13 each embedding a bead core 12 therein, a sidewall portion 14 substantially extending from the each bead portion 13 outward in a radial direction, and a tread portion 15 of substantially a cylindrical form connecting radially outer ends of the sidewall portions 14 to each other.
Moreover, the invention may be applied to a pneumatic tire for an air plane or for truck and bus.

Also, the pneumatic tire 11 comprises a carcass layer 18 toroidally extending between the bead cores 12 and reinforcing the sidewall portion 14 and the tread portion 15, in which widthwise both end portions of the carcass layer 18 are wound around the respective bead cores 12 from an axially inside toward axially outside. The carcass layer 18 is comprised of at least one ply, two plies 19 in the illustrated embodiment. In these carcass plies 19 are embedded many carcass cords 20 such as nylon cord, aromatic polyamide cord, steel cord or the like (nylon cord in the illustrated embodiment), which are arranged in parallel to each other, intersecting at a cord angle of 70-90° with respect to an equator S of the tire or extending in a radial direction (meridional direction).

Numeral 23 is a belt layer arranged at an outside of the carcass layer 18 in the radial direction. The belt layer 23 is constituted by laminating at least two belt plies, an inner belt ply 24 and an outer belt ply 25 in the illustrated embodiment.
In each interior of the belt plies 24, 25 are embedded many steel cords 26, 27 arranged in parallel to each other, and each of these steel cords 26, 27 is made from twisted wires or a monofilament. Also, the steel cords 26, 27 of the two belt plies 24, 25 are slantly crossed with each other in opposite directions with respect to the equator S of the tire.

At this moment, all of the steel cords 26, 27 in the belt plies 24, 25 are inclined at an angle A of not less than 45° with respect to the equator S of the tire and extended along the widthwise direction rather than the circumferential direction. Therefore, the out-of-plane bending rigidity of the belt layer 23 in the circumferential direction (rigidity to the bending in the widthwise direction of the tire as folding lines) is lowered to make the longitudinal spring constant of the pneumatic tire 11 small. As a result, the knock feeling in the riding over protrusions, the rugged feeling on rough road surface and the like are reduced to improve the ride comfort.

Further, when the inclination angle A is not less than 45°, the growth in the circumferential direction at the time of ground contact deformation is absorbed by stretching the coating rubber between the steel cords 26, 27, so that even when the cords embedded in the belt plies 24, 25 are inextensible steel cords 26, 27, the tire deformation is not obstructed too by these steel cords 26, 27, and hence the ground contact length becomes long and the sufficient driving force can be ensured. Moreover, as the inclination angle A is not less than 45°, the inextensible steel cords 26, 27 are extended along the widthwise direction, so that the rigidity to compression force in the widthwise direction becomes high and hence the buckling deformation in the widthwise direction of the tread portion 15 can be suppressed, and the ground contacting form can be maintained substantially at a constant form.

At this moment, the inclination angle A is preferable to be not less than 50°. When the inclination angle A is not less than 50°, the improvement of the ride comfort, ensuring of driving force and suppression of buckling deformation can be attained sufficiently. As the inclination angle A becomes larger, the above effects can be made more remarkable. However, when the inclination angle A exceeds 85°, the in-plane shear rigidity lowers and the value of the lateral force generated in the cornering becomes insufficient, so that the inclination angle A is preferable to be within a range of 50°-85°.

Also, when the belt layer 23 is comprised of two belt plies 24, 25 as mentioned above, the in-plane shear rigidity of the belt layer 23 may not be sufficient. In such a case, however, the in-plane shear rigidity may be improved without substantially increasing the longitudinal spring constant by laminating another belt ply having an inclination angle A of the steel cord of not less than 45° to form a belt layer comprised of three plies. Moreover, when the belt layer 23 is comprised of four or more belt plies, the weight becomes too large, so that the belt layer is preferable to be comprised of two or three belt plies as mentioned above.

Numeral 31 is a tread made of rubber arranged at the outside in the radial direction of the carcass layer 18 and the belt layer 23, in which plural wide-width main grooves, four main grooves 32 in the illustrated embodiment are formed on the outer surface (treading face) of the tread 31 so as to extend in the circumferential direction for improving the drainage property. Also, many wide-width lateral grooves extending in the widthwise direction maybe formed on the outer surface of the tread 31. When the plural main grooves 32 are formed on the outer surface of the tread 31, if a large lateral force is applied to the pneumatic tire 11, there may be caused a fear that the tread portion 15is subjected to a buckling deformation at a position of the main groove 32 having a low bending rigidity.

However, when the width of all of the belt plies 24, 25 is made wider than a distance N between the main grooves 32 located at outermost sides in the widthwise direction, the inextensible steel cords 26, 27 extending in the widthwise direction and having a high bending rigidity can effectively suppress the above buckling deformation as a resistance. Thus, the full width of the belt plies 24, 25 is preferable to be made wider than the distance N between outside walls of the two main grooves 32 located at the outermost sides in the widthwise direction. Further, the full width of the belt plies 24, 25 is further preferable to have a width covering the whole of the treading face of the tread portion 15, concretely a range of 0.8-1.0 times a tread width W.

Numeral 35 is a belt reinforcing layer arranged between the belt layer 23 and the carcass layer 18 so as to overlap with the belt layer 23 in the tread portion 15. The belt reinforcing layer 35 is comprised of at least one reinforcing ply 36 (one ply in the illustrated embodiment). In the interior of the reinforcing ply 36 are embedded reinforcing cords 37 of an organic fiber such as nylon, aromatic polyamide or the like extending substantially in parallel to the equator S of the tire. When the belt reinforcing layer 35 embedded in its interior with the organic fiber reinforcing cords 37 extending substantially in parallel to the equator S of the tire is arranged in the tread portion 15, it is suppressed to largely grow the size of the tread portion 15 outward in the radial direction due to the centrifugal force during the high-speed running, whereby the steering stability and high-speed durability of the tire can be maintained as they are.

Since the belt plies 24, 25 are terminated at the belt end, the step difference of the diameter is existent therebetween. If the belt reinforcing layer 35 having a width wider than that of the belt layer 23 is arranged between the belt layer 23 and the tread 31 at the position of such a step difference, the diameter of the belt reinforcing layer changes at the position of the step difference. However, when the belt reinforcing layer 35 is arranged between the belt layer 23 and the carcass layer 18 as in the illustrated embodiment, the carcass layer 18 in the tread portion 15 has approximately a constant outer diameter irrespectively of positions in the widthwise direction, so that the diameter of the belt reinforcing layer 35 is uniformized to make the rigidity uniform to thereby improve the steering stability.

Now, the reinforcing cord 37 in the belt reinforcing layer 35 is preferable to be made from the aromatic polyamide. In this way, the size growth of the tread portion 15 can be forcedly suppressed even if the temperature of the tread portion 15 becomes higher during the high-speed running while attaining the weight reduction. Also, the width P of the belt reinforcing layer (cap) 35 is preferable to be made wider than the widths of the belt plies 24, 25. In this case, the strain at the belt end and cracking can be suppressed forcedly but also the size growth in the greater part or the whole of the tread portion 15 based on the high-speed running under an inflation of an internal pressure can be controlled strongly, whereby the durability of the pneumatic tire 11 can be improved effectively.

Furthermore, the belt reinforcing layer 35 may be formed by spirally winding a ribbon-shaped body of a constant width, which is formed by covering one reinforcing cord 37 or few cords with rubber, on the outside of the carcass layer 18. When the belt reinforcing layer 35 is shaped in this manner, the shaping of the belt reinforcing layer 35 can be made in a high efficiency and a high precision.

When the steel cords 26, 27 inclined at the angle A of not less than 45° with respect to the equator S of the tire are embedded in the belt layer 23 as previously mentioned, the out-of-plane bending rigidity in the widthwise direction (rigidity to the bending oin the circumferential direction of the tire as folding lines) at the tread portion 15 (belt layer 23) becomes high. In this case, when the radius of curvature R of the outer profile of the tread is rendered into a relatively small value, the tread portion 15 is also largely deformed in the ground contacting, so that a greater part of the tire loading is born by the tread portion 15 having a high out-of-plane bending rigidity in the widthwise direction in addition to the sidewall portion 14 having a low bending rigidity, and hence the longitudinal spring constant of the pneumatic tire 11 as a whole becomes a large value to deteriorate the ride comfort.

In this embodiment, therefore, the radius of curvature (crown radius) R of the outer profile of the tread in at least a central portion of the tread is made not less than 3000 mm. Thus, the wide region of the outer profile of the tread is substantially in parallel to the road surface and the deformation amount of the tread portion 15 in the ground contacting becomes small, and hence the tire loading is not substantially born by the tread portion 15 having a high out-of-plane bending rigidity in the widthwise direction but is almost born by the sidewall portion 14 having a low bending rigidity, and the deterioration of the ride comfort can be suppressed.

Also, the tread portion 15 of the pneumatic tire 11 is deformed at a leading time and a trailing time in the ground contacting to cause strain at the belt end. If the radius of curvature R of the outer profile of the tread is a relatively small value, the tread portion 15 is subjected to a large bending deformation at the leading time and the trailing time and the strain generated at the belt end becomes a large value, and hence the cracking is easily caused to deteriorate the durability.

However, when the radius of curvature R is not less than 3000 mm as previously mentioned, the wide region of the outer profile of the tread becomes substantially in parallel to the road surface and the deformation amount of the tread portion 15 (belt plies 24, 25) at the leading time and the trailing time becomes small and the strain generated at the belt end becomes small, and hence the deterioration of the durability due to the occurrence of the cracking can be suppressed. Moreover, the range of rendering the radius of curvature R into not less than 3000 mm is preferable to be a range of 0.5-0.9 times the tread width W centering the equator S of the tire. On the other hand, when the radius of curvature R exceeds 5000 mm, the ground contacting form becomes a butterfly form and the ground contact pressure at an end portion of the tread becomes higher, and there is caused a fear of rapidly promoting the wearing at this end portion, so that it is common to be not more than 5000 mm.

### EXAMPLE 1

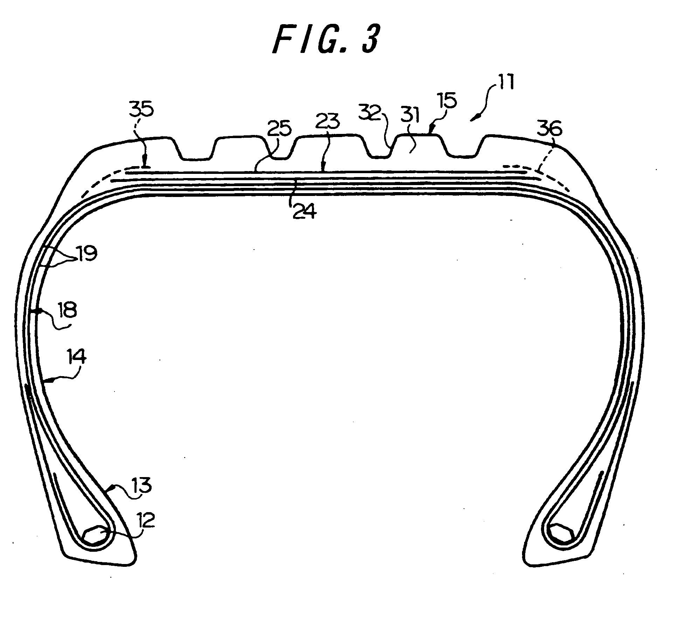

The invention will be described with respect to a test example below. In this test, there are provided an example tire as shown in FIGS. 1 and 2, a comparative tire 1 as shown in FIG. 3, a comparative tire 2 having the same structure as in the example tire except that the inclination angle of the steel cord is less than 45°, and a comparative tire 3 having the same structure as in the example tire except that the radius of curvature R of the outer profile of the tread is less than 3000 mm, respectively.

Each of the above tires is a tire for a high-performance passenger car and has a tire size of 215/45R17. In the each tire, the carcass layer is comprised of two carcass plies each embedded with nylon cords intersecting at 90° with respect to an equator S of the tire. In the example tire and the comparative tires 1 and 3, the belt layer is constituted by laminating two belt plies, i.e. an inner belt ply embedding steel cords inclined at 70° with respect to the equator S of the tire upward to the left and an outer belt ply embedding steel cords inclined at 70° with respect to the equator S of the tire upward to the right, while in the comparative tire 2, the belt layer is constituted by laminating three belt plies, i.e. an inner belt ply embedding steel cords inclined at 30° with respect to the equator S of the tire upward to the left and two outer belt plies each embedding steel cords inclined at 30° with respect to the equator S of the tire upward to the right.

Further, in the example tire and the comparative tires 2 and 3, a belt reinforcing layer (cap) embedding reinforcing cords extended substantially in parallel to the equator S of the tire is arranged between the carcass layer and the belt layer, while in the comparative tire 1, a pair of belt reinforcing layers (layer) embedding reinforcing cords extended substantially in parallel to the equator S of the tire are arranged between the belt layer and the tread at positions overlapping with widthwise both end portions of the belt layer. Moreover, in the example tire and the comparative tires 1, 2, the radius of curvature R of the outer profile of the tread is 5000 mm, while in the comparative tire 3, the radius of curvature R is 1000 mm.

In the belt ply of the above each tire, steel cords each formed by twisting three steel filaments of 0.3 mm in diameter are embedded at an embedding distance (distance between centers of adjacent steel cords) of 1.2 mm. Also, in the belt reinforcing layer of each of the example tire and the comparative tires 2 and 3, the reinforcing cords of 0.7 mm in diameter each formed by twisting aromatic polyamide filaments are embedded at an embedding distance of 1.2 mm, while in the comparative tire 1, the reinforcing cords of 700d/2 nylon are embedded at an embedding distance of 1.2 mm. Furthermore, in each of the above tires, a tread width W is 200 mm, and a width of the inner belt ply is 200 mm, and a width of the outer belt ply is 190 mm. In the example tire and the comparative tires 2 and 3, a width P of the belt reinforcing layer is 210 mm, while the width P of each belt reinforcing layer in the comparative tire 1 is 30 mm.

Then, each of the above tire is inflated under an internal pressure of 240 kPa and is subjected to a test for a high-speed durability by running at a high speed while pushing onto a drum at slip angle and camber angle of 0° under a load of 5 kN. This test for the high-speed durability is a test wherein the running of the each tire starts from a speed of 100 km/h and the speed is gradually increased at a step of 10 km/h every 10 minutes to determine a trouble generating speed. It is judged that the trouble is generated when an accelerometer attached to a tire shaft detects abnormal vibrations of the tire shaft. As a result, the trouble generating speed in the comparative tires 1, 2 and 3 are 260 km/h, 320 km/h and 270 km/h, respectively, while that of the example tire is 320 km/h, from which it is understood that the example tire has a sufficient high-speed durability.

Then, the steering stability is evaluated by a feeling of an expert test driver when the each tire is mounted on a high-performance passenger car and run on a dry road surface of a circuit course at a maximum speed of 200 km/h. When the evaluation is represented by a score on the basis that a perfect score is 100, the score of the comparative tires 1, 2 and 3 is 70, 60 and 70, respectively, while the score of the example tire is 80, so that the steering stability is improved in the example tire. As to the comparative tires 2 and 3, the driver comments that the car is sensitive to the operation of the steering wheel and hard to work. This is considered due to the fact that the longitudinal spring constant in the comparative tires 2 and 3 is higher than that of the example tire.

Then, the ride comfort against vibrations is evaluated by the expert test driver when the car is passed on joint between bumpy lane and express lane previously provided on the test course. When the evaluation is represented by a score on the basis that a perfect score is 100, the score of the comparative tires 1, 2 and 3 is 70, 50 and 75, respectively, while the score of the example tire is 80, so that the ride comfort against vibrations is also improved in the example tire. As to the comparative tires 2 and 3, the driver comments that the tire shows a rugged feeling. This is also considered due to the fact that the longitudinal spring constant in the comparative tires 2 and 3 is higher than that of the example tire.

### INDUSTRIAL APPLICABILITY

The invention is applicable to an industrial filed for the pneumatic tire comprising the belt reinforcing layer arranged between the belt layer and the carcass player.

## Claims

1. A pneumatic tire comprising a carcass layer toroidally extending between a pair of bead cores and wound around the bead cores at its widthwise both end portions, a belt layer arranged at an outside of the carcass layer in a radial direction and comprised of at least two belt plies each embedded with steel cords therein, the cords of which plies being slantly crossed with each other with respect to an equator S of the tire, a tread arranged at an outside of the belt layer in the radial direction, and a belt reinforcing layer arranged so as to overlap with the belt layer and embedded in its interior with reinforcing cords of an organic fiber extending substantially in parallel to the equator S of the tire, **characterised in that** an inclination angle A of the steel cord in all belt plies with respect to the equator S of the tire is not less than 45°, and the belt reinforcing layer is arranged between the belt layer and the carcass layer, and a radius of curvature R of an outer profile of the tread in a meridional section of the tire is not less than 3000 mm in at least a central portion of the tread.

2. A pneumatic tire according to claim 1, wherein the inclination angle A is within a range of 50°-85°.

3. A pneumatic tire according to claim 1 or 2, wherein the belt reinforcing layer has a width P wider than that of the belt ply.

4. A pneumatic tire according to any one of claims 1-3, wherein a plurality of main grooves are formed on an outer surface of the tread and a width of the belt plies is wider than a distance N between outside walls of the main grooves located at outer most sides in the widthwise direction.

5. A pneumatic tire according to any one of claims 1-4, wherein the belt reinforcing layer is shaped by spirally winding a ribbon-shaped body formed by covering one reinforcing cord of few parallel reinforcing cords with rubber.

6. A pneumatic tire according to any one of claims 1-5, wherein the reinforcing cord in the belt reinforcing layer is made from aromatic polyamide.

## Patentansprüche

1. Luftreifen, der aufweist: eine Karkassenlage, die sich ringförmig zwischen zwei Wulstkernen erstreckt und an ihren beiden Endabschnitten in Breitenrichtung um die Wulstkerne herumgewickelt ist, eine Gürtellage, die an einer Außenseite der Karkassenlage in Radialrichtung angeordnet ist und aus mindestens zwei Gürteleinlagen mit jeweils darin eingebetteten Stahlkords besteht, wobei die Kords dieser Einlagen in Bezug auf einen Äquator S des Reifens einander schräg überkreuzen, eine Lauffläche, die an einer Außenseite der Gürtellage in Radialrichtung angeordnet ist, und eine überlappend mit der Gürtellage angeordnete Gürtelverstärkungslage mit in ihrem Inneren eingebetteten Verstärkungskords aus einer organischen Faser, die sich im wesentlichen parallel zum Äquator S des Reifens erstrecken, **dadurch gekennzeichnet, daß** ein Neigungswinkel A des Stahlkords in allen Gürtellagen bezüglich des Äquators S des Reifens nicht weniger als 45° beträgt und die Gürtelverstärkungslage zwischen der Gürtellage und der Karkassenlage angeordnet ist, und daß ein Krümmungsradius R eines äußeren Profils der Lauffläche in einem meridionalen Abschnitt des Reifens zumindest in einem Mittelabschnitt der Lauffläche nicht weniger als 3000 mm beträgt.

2. Luftreifen nach Anspruch 1, wobei der Neigungswinkel A in einem Bereich von 50°-85° liegt.

3. Luftreifen nach Anspruch 1 oder 2, wobei die Gürtelverstärkungslage eine größere Breite P als die der Gürteleinlage aufweist.

4. Luftreifen nach einem der Ansprüche 1-3, wobei an einer Außenfläche der Lauffläche mehrere Hauptprofilrillen ausgebildet sind und eine Breite der Gürteleinlagen größer ist als ein Abstand N zwischen Außenwänden der Hauptprofilrillen, die an den äußersten Seiten in Breitenrichtung angeordnet sind.

5. Luftreifen nach einem der Ansprüche 1-4, wobei die Gürtelverstärkungslage durch spiralförmiges Wickeln eines bandförmigen Körpers geformt wird, der durch Bedecken eines Verstärkungskords von einigen parallelen Verstärkungskords mit Gummi gebildet wird.

6. Luftreifen nach einem der Ansprüche 1-5, wobei der Verstärkungskord in der Gürtelverstärkungslage aus aromatischem Polyamid besteht.

## Revendications

1. Pneumatique comprenant une couche de carcasse s'étendant toroïdalement entre une paire de tringles et enroulée autour des tringles à ses deux parties terminales dans le sens de la largeur, une couche de ceinture agencée à l'extérieur de la couche de carcasse dans une direction radiale et composée d'au moins deux plis de ceinture ayant chacun des câblés d'acier noyés dans ceux-ci, câblés dont les plis sont croisés transversalement entre eux par rapport à l'équateur S du pneu, une bande de roulement agencée à l'extérieur de la couche de ceinture dans la direction radiale, et une couche de renforcement de ceinture agencée de façon à chevaucher la couche de ceinture et ayant des câblés renforçants d'une fibre organique noyés à l'intérieur de celle-ci, s'étendant essentiellement en parallèle avec l'équateur S du pneu, **caractérisé en ce qu'**un angle d'inclinaison A du câblé d'acier dans tous les plis de ceinture par rapport à l'équateur S du pneu n'est pas inférieur à 45°, et la couche de renforcement de ceinture est agencée entre la couche de ceinture et la couche de carcasse, et le rayon de courbure R d'un profil externe de la bande de roulement dans une section méridienne du pneu n'est pas inférieur à 3000 mm au moins dans une partie centrale de la bande de roulement.

2. Pneumatique selon la revendication 1, dans lequel l'angle d'inclinaison A est dans une gamme de 50° à 85°.

3. Pneumatique selon la revendication 1 ou 2, dans lequel la couche de renforcement de ceinture a une largeur P plus large que celle du pli de ceinture.

4. Pneumatique selon l'une quelconque des revendications 1 à 3, dans lequel une pluralité de rainures principales sont formées sur une surface externe de la bande de roulement et une largeur des plis de ceinture est plus large qu'une distance N entre les parois extérieures des rainures principales se trouvant aux côtés les plus externes dans le sens de la largeur.

5. Pneumatique selon l'une quelconque des revendications 1 à 4, dans lequel la couche de renforcement de ceinture est façonnée en enroulant en spirale un corps en forme de ruban formé en recouvrant un câblé renforçant de quelques câblés renforçants parallèles avec du caoutchouc.

6. Pneumatique selon l'une quelconque des revendications 1 à 5, dans lequel le câblé renforçant dans la couche de renforcement de ceinture est fait à partir de polyamide aromatique.
